# EUROPÄISCHE PATENTSCHRIFT

(11) **EP 1 987 584 B1**
(45) Veröffentlichungstag und Bekanntmachung des Hinweises auf die Patenterteilung: **03.07.2013**
(21) Anmeldenummer: 07703374.4
(22) Anmeldetag: 02.02.2007
(51) Int. Cl.: H02P 6/10

(54) **ANTRIEBSEINRICHTUNG FÜR EINE VERSTELLEINRICHTUNG ZUM VERSTELLEN EINES FAHRZEUGTEILS UND VERFAHREN ZUM BETRIEB EINER ANTRIEBSEINRICHTUNG**
DRIVE DEVICE FOR AN ADJUSTING DEVICE FOR ADJUSTING A VEHICLE PART AND METHOD FOR OPERATING A DRIVE DEVICE
MÉCANISME D'ENTRAÎNEMENT D'UN DISPOSITIF DE RÉGLAGE PERMETTANT DE RÉGLER UNE PIÈCE DE VÉHICULE ET PROCÉDÉ DE FONCTIONNEMENT DE CE MÉCANISME D'ENTRAÎNEMENT

(30) Priorität: 14.02.2006 DE 102006007610
(43) Veröffentlichungstag der Anmeldung: 05.11.2008
(73) Patentinhaber: Brose Fahrzeugteile GmbH & Co. KG, Coburg, 96450 Coburg (DE)
(72) Erfinder: KLIPPERT, Uwe, 96472 Rödental (DE)
(74) Vertreter: Ninnemann, Detlef
(86) Internationale Anmeldenummer: PCT/EP2007/001105
(87) Internationale Veröffentlichungsnummer: WO 2007/093323

(56) Entgegenhaltungen:
- EP-A- 0 955 721
- EP-A- 1 615 332
- EP-A1- 0 800 263
- WO-A-02/054577
- US-A- 5 223 775
- US-A- 5 955 851
- US-A- 5 982 067

## Beschreibung

Die Erfindung betrifft eine Antriebseinrichtung für eine Verstelleinrichtung zum Verstellen eines Fahrzeugteils eines Fahrzeugs gemäß dem Oberbegriff des Anspruchs 1 und ein Verfahren zum Betrieb einer Antriebseinrichtung gemäß dem Oberbegriff des Anspruchs 7.

Eine derartige Antriebseinrichtung ist aus der DE 197 51 861 A1 bekannt, die eine Antriebseinrichtung mit einem elektronisch kommutierten Elektromotor und einer elektronischen Steuereinrichtung offenbart, bei der der elektronisch kommutierte Motor mit einem Sensor zur Erfassung der Drehzahl und/oder der Position eines Rotors versehen ist, der mit einem Mikrocomputer der Steuereinrichtung zur Auswertung der von den Sensor übermittelten Sensorsignale zusammenwirkt. Zum Antrieb des elektronisch kommutierten Motors wird über die elektronische Steuereinrichtung eine Ansteuerspannung an den elektronisch kommutierten Motor angelegt, deren Frequenz und/oder Pulsweite zur Regelung der Drehzahl des elektronisch kommutierten Motors variierbar sind. Die Antriebseinrichtung weist weiterhin eine Halbleiterendstufe auf, die zur Verstärkung des Signals der Ansteuerspannung zwischen die elektronische Steuereinrichtung und den elektronisch kommutierten Motor geschaltet ist.

Elektronisch kommutierte Motoren weisen gegenüber mechanisch kommutierten Motoren den Vorteil auf, dass die zu einer mechanischen Kommutierung notwendigen Verschleißteile entfallen und insbesondere keine Bürsten, die in verstärktem Maße einem Abrieb unterliegen und zudem durch Bürstenfeuer elektromagnetische Störsignale verursachen und somit das EMV-Verhalten (EMV: Elektromagnetische Verträglichkeit) nachteilig beeinflussen, zur Kommutierung erforderlich sind.

Ein elektronisch kommutierter Motor weist einen Rotor und einen Stator auf, die zum elektrischen Antrieb des elektronisch kommutierten Motors zusammenwirken. Im Stator sind zu diesem Zweck elektrische Wicklungen angeordnet, die von einem Strom durchflossen werden und dadurch ein elektromagnetisches Feld erzeugen, das so mit dem Rotor zusammenwirkt, dass der Rotor in eine Rotationsbewegung versetzt wird. Um einen Stromfluss in den elektrischen Wicklungen des Stators zu bewirken, wird über eine elektronische Steuereinrichtung eine zeitlich veränderliche Ansteuerspannung an den elektronisch kommutierten Motor angelegt.

Zur Ansteuerung des elektronisch kommutierten Motors wird herkömmlicherweise eine Ansteuerspannung mit einer rechteckförmigen Signalform gewählt, da hierdurch eine maximale Leistungsausbeute der eine Halbleiterendstufe aufweisenden Antriebseinrichtung zu erreichen ist und die rechteckförmige Signalform durch ein einfaches Umschalten der Ansteuerspannung bewirkt werden kann. Eine solche rechteckigförmige Signalform bietet jedoch den Nachteil, dass die Akustik der Antriebseinrichtung und die elektromagnetische Abstrahlung der Antriebseinrichtung erhöht sein können. Wird hingegen ein sinusförmiges Signal für die Ansteuerspannung gewählt, so ist zwar die Akustik der Antriebseinrichtung verbessert, die Leistungsausbeute der Antriebseinrichtung jedoch erheblich verschlechtert.

Die US 5,955,851 offenbart ein System zur Ansteuerung eines elektronisch kommutierten Motors, bei dem das Ansteuerungssignal durch eine Pulsweitenmodulation geändert und angepasst werden kann. Das System ist dabei ausgebildet, ein ruhiges Betriebsverhalten einzustellen, indem die Stromänderung in den einzelnen Windungen des Motors angepasst und dadurch ein im Wesentlichen konstanter (Gesamt-)Strom im System eingestellt wird.

Aus der US 5,223,775 ist ein System zur Ansteuerung eines elektronisch kommutierten Motors bekannt, bei dem der Strom in den Windungen des Motors mittels einer Pulsweitenmodulation gesteuert und angepasst wird. Das Ansteuerungssignal ist derart optimiert, dass das Ausgangsdrehmoment des Motors im Wesentlichen konstant ist ("ripplefree torque output").

Aus der EP 0 800 263 A1 ist ein elektronisch kommutierter Motor bekannt, bei dem die Signalform des zur Ansteuerung des Motors verwendeten Ansteuerungssignals aus einem Speicher ausgelesen wird. Im Speicher sind unterschiedliche Signalformen enthalten, aus denen die jeweils geeignete Signalform ausgewählt wird, um ein konstantes Drehmoment am Ausgang des Motors zur Verfügung zu stellen und "ripple" im Drehmoment zu minimieren.

Die EP 1 615 332 A1 offenbart ein Verfahren zur Ansteuerung eines elektronisch kommutierten Motors, bei dem die Windungen des Motors in Abhängigkeit von Messwerten unterschiedlicher Magnetfeldsensoren bestromt werden. Hierzu werden Absolutpositionswerte eines Rotors gemessen und anhand der Messwertkombination der Absolutpositionswerte Fehlerzustände erkannt.

Aufgabe der vorliegenden Erfindung ist es, eine Antriebseinrichtung und ein Verfahren zum Betrieb einer Antriebseinrichtung zur Verfügung zu stellen, mit denen das Betriebsverhalten der Antriebseinrichtung hinsichtlich der Akustik, der elektromagnetischen Abstrahlung, der Erwärmung und der Leistungsausbeute der Antriebseinrichtung verbessert ist.

Diese Aufgabe wird erfindungsgemäß durch einen Gegenstand mit den Merkmalen des Anspruchs 1 gelöst.

Erfindungsgemäß ist hierbei vorgesehen, dass bei einer Antriebseinrichtung für eine Verstelleinrichtung zum Verstellen eines Fahrzeugteils eines Fahrzeugs mit einem elektronisch kommutierten Motor und einer elektronischen Steuereinrichtung, die den elektronisch kommutierten Motor mittels einer Ansteuerspannung ansteuert, die elektronische Steuereinrichtung Mittel aufweist, mittels derer die Signalform der Ansteuerspannung anhand von mindestens einem Betriebsparameter zur Optimierung der Leistungsausbeute, der Akustik, der elektromagnetischen Abstrahlung und/oder der Erwärmung der Antriebseinrichtung anpassbar ist. Die Mittel sind dabei ausgebildet und vorgesehen,
- in einem Normalbetrieb bei geringer Anzahl von Betätigungen der Antriebseinrichtung die Signalform so zu wählen, dass die Akustik und die elektromagnetische Abstrahlung der Antriebseinrichtung optimiert werden, und
- bei einem Lastbetrieb bei häufiger Betätigung der Antriebseinrichtung die Signalform so zu wählen, dass die Betriebstemperatur der Antriebseinrichtung begrenzt ist.

Der Erfindung geht von der Erkenntnis aus, dass das Betriebsverhalten einer Antriebseinrichtung durch die Signalform der den elektronisch kommutierten Motor der Antriebseinrichtung ansteuernden Ansteuerspannung bestimmt ist. Unterschiedliche Signalformen können hierbei optimal sein für hinsichtlich unterschiedlicher Kriterien optimierte Betriebsverhalten. Insbesondere gibt es Signalformen, mit denen
- die Akustik, also im Wesentlichen die Lautstärke der Antriebseinrichtung im Betrieb,
- die Leistungsausbeute, entsprechend dem Wirkungsgrad der Antriebseinrichtung, mit dem elektrische Energie in mechanische Arbeit umgesetzt wird,
- die elektromagnetische Abstrahlung, die im Wesentlichen bestimmt ist durch des vom elektronisch kommutierten Motor abgestrahlte elektromagnetische Störsignale, und/oder
- die Erwärmung der Antriebseinrichtung, im Wesentlichen bestimmt durch die Erwärmung von den elektronisch kommutierten Motor ansteuernden Halbleiterbauelementen und die Erwärmung des Motors selbst,
optimiert werden kann.

Grundgedanke der Erfindung ist es hierbei, die Signalform der Ansteuerspannung jeweils so anzupassen, dass das Betriebsverhalten der Antriebseinrichtung in Abhängigkeit von Betriebsparametern hinsichtlich von Optimierungskriterien, insbesondere der Akustik, der Leistungsausbeute, der elektromagnetischen Abstrahlung und/oder der Erwärmung der Antriebseinrichtung optimiert ist. Die Betriebsparameter fungieren somit als Eingangsgrößen, die den Zustand der Antriebseinrichtung, des Fahrzeugs und/oder der Umgebung beschreiben und anhand derer die Signalform der Ansteuerspannung zur Optimierung der Leistungsausbeute, der Akustik, der elektromagnetischen Abstrahlung und/oder der Erwärmung der Antriebseinrichtung ausgewählt wird. Unter der Signalform ist hier die grundlegende Form des Signals der Ansteuerspannung zu verstehen, die beispielsweise sinusförmig, rechteckförmig, dreiecksförmig oder auf beliebige andere Weise geformt sein kann.

Betriebsparameter, die als Eingangsgrößen zur Bestimmung einer zu verwendenden Signalform dienen, können hierbei insbesondere sein:
- der durch den elektronisch kommutierten Motor aufgenommene Strom,
- die durch den elektronisch kommutierten Motor aufgenommene Leistung,
- die Anzahl der Betätigungen der Antriebseinrichtungen,
- das Betätigungsverhalten der Antriebseinrichtung, beispielsweise eine Schwer- oder Leichtgängigkeit der Verstelleinrichtung,
- die Verstellgeschwindigkeit der Antriebseinrichtung, also die Geschwindigkeit, mit der das zu verstellende Fahrzeugteil durch die Antriebseinrichtung bewegt wird,
- die Position des durch die Antriebseinrichtung zu verstellenden Fahrzeugteils,
- die Außentemperatur, also die Temperatur der Umgebung,
- die elektromagnetische Abstrahlung der Antriebseinrichtung, insbesondere die Abstrahlung elektromagnetischer Störsignale durch den elektronisch kommutierten Motor, die wesentlich das EMV-Verhalten der Antriebseinrichtung bestimmt,
- die Betriebstemperatur der Antriebseinrichtung, insbesondere die Temperatur von Halbleiterbauelementen der elektronischen Steuereinrichtung und die Temperatur des elektronisch kommutierten Motors,
- die Lautstärke der Antriebseinrichtung, insbesondere der durch den elektronisch kommutierten Motor erzeugte Geräuschpegel,
- die Bordspannung eines elektrischen Versorgungssystem des Fahrzeugs, beispielsweise die zur Verfügung stehende Batteriespannung des Fahrzeugs,
- der Bewegungszustand des Fahrzeugs, beispielsweise die Information, ob das Fahrzeug steht oder fährt, und/oder
- die Fahrgeschwindigkeit des Fahrzeugs.

Anhand der Betriebsparameter wird dann die optimale Signalform zum Betrieb der Antriebseinrichtung ausgewählt. Beispielsweise kann die Signalform der Ansteuerspannung bei erhöhter Lautstärke der Antriebseinrichtung im Betrieb so angepasst werden, dass sich die Lautstärke reduziert, die Akustik der Antriebseinrichtung also verbessert ist. In einem anderen Fall, kann die Signalform der Ansteuerspannung bei erhöhter Betriebstemperatur der Halbleiterbauelemente der Antriebseinrichtung so gewählt werden, dass die Leistungsausbeute der Antriebseinrichtung verbessert ist, sich somit die Temperatur der Halbleiterbauelemente verringert und die Erwärmung der Antriebseinrichtung reduziert wird. In wiederum einem anderen Fall kann eine optimale Signalform für eine minimale Abstrahlung von elektromagnetischen Störsignalen gewählt werden. In wiederum einem anderen Fall wird bei einer Schwergängigkeit der Antriebseinrichtung und/oder des zu verstellenden Fahrzeugteils die Leistungsausbeute optimiert und somit das durch die Antriebseinrichtung zur Verfügung gestellte Drehmoment maximiert.

Vorteilhafterweise wirkt die elektronische Steuereinrichtung mit mindestens einem Sensor zusammen, der zum Erfassen eines oder mehrerer der Betriebsparameter dient. Beispielsweise kann ein Sensor vorgesehen sein, um die Drehzahl des elektronisch kommutierten Motors zu erfassen. Weitere Sensoren können beispielsweise zur Bestimmung der Position des durch die Antriebseinrichtung zu verstellenden Fahrzeugsteils, zur Messung der Außentemperatur, zur Messung der elektromagnetischen Abstrahlung des elektronisch kommutierten Motors und/oder zur Messung der Betriebstemperatur der Antriebseinrichtung, insbesondere der in der Antriebseinrichtung verwendeten Halbleiterbauelemente und des Motors dienen.

Erfindungsgemäß wird die Signalform der Ansteuerspannung zur Ansteuerung des elektronisch kommutierten Motors abhängig von Betriebsparametern angepasst. Die Signalform kann hierbei zur Optimierung der Leistungsausbeute, der Akustik, der elektromagnetischen Abstrahlung und/oder der Erwärmung der Antriebseinrichtung frei synthetisierbar sein. Beispielsweise kann die Signalform rechteckförmig oder sinusförmig sein, kann aber auch eine beliebige andere Form aufweisen. Die Steuereinrichtung bestimmt die Signalform dann jeweils so, dass das Betriebsverhalten hinsichtlich der Leistungsausbeute, der Akustik, der elektromagnetischen Abstrahlung und/oder der Erwärmung der Antriebseinrichtung optimiert ist. Die Signalform kann hierbei insbesondere auch eine solche Form aufweisen, dass die Signalform hinsichtlich einer Kombination von Optimierungskriterien optimal ist. Die Signalform stellt dann einen Kompromiss dar, mit dem das Betriebsverhalten der Antriebseinrichtung hinsichtlich der Kombination der Optimierungskriterien, also beispielsweise hinsichtlich der Kombination von Leistungsausbeute und Akustik, optimiert ist. In der Regel bewirkt eine rechteckförmige Signalform eine Optimierung der Leistungsausbeute, während eine sinusförmige Signalform eine Reduzierung der Lautstärke der Antriebseinrichtung im Betrieb ermöglicht. Beliebige andere Signalformen sind denkbar, mit denen jeweils unterschiedliche Betriebszustände optimiert werden können oder ein optimales Gesamtbetriebsverhalten der Antriebseinrichtung erreicht werden kann.

Bevorzugt weist die elektronische Steuereinrichtung der Antriebseinrichtung zur Bestimmung der optimalen Signalform einen Mikrocomputer auf, der die Signalform der Ansteuerspannung anhand der Betriebsparameter aus einer Anzahl von vorgegebenen und in einem Speichermedium der elektronischen Steuereinheit abgespeicherten Signalformen auswählt. In dem Speichermedium sind hierbei unterschiedliche Signalformen abgelegt, die jeweils einem Betriebszustand zugeordnet sind. So können in dem Speichermedium beispielsweise Signalformen gespeichert sein, mittels derer die Leistungsausbeute maximiert, die Akustik optimiert, die elektromagnetische Abstrahlung minimiert und/oder die Erwärmung der Antriebseinrichtung limitiert werden kann. In dem Speichermedium kann dann beispielsweise eine Signalform abgelegt sein, die eine optimale Leistungsausbeute bewirkt. Eine wiederum andere Signalform kann optimal sein für ein möglichst leises Betriebsverhalten der Antriebseinrichtung, also eine verbesserte Akustik mit verringerter Lautstärke. Eine dritte Signalform kann in dem Speichermedium vorhanden sein, die die elektromagnetische Abstrahlung reduziert, und weitere Signalformen können vorhanden sein, mittels derer das Betriebsverhalten hinsichtlich anderer Kriterien optimiert ist. Die unterschiedlichen Signalformen können hierbei vorab bestimmt werden und im Speichermedium gespeichert werden, um dann im Betrieb der Antriebseinrichtung durch den Mikrocomputer der elektronischen Steuereinrichtung ausgewählt zu werden. Vorteilhafterweise wird die Signalform während des Betriebes der Antriebseinrichtung variiert und geregelt, wird also abhängig vom Betriebsverhalten der Antriebseinrichtung verändert, um das Betriebsverhalten zeitnah unter Berücksichtigung der Betriebsparameter anzupassen und ein hinsichtlich der Leistungsausbeute, der Akustik, der elektromagnetischen Abstrahlung und/oder der Erwärmung der Antriebseinrichtung optimiertes Betriebsverhalten zu erreichen.

Die Aufgabe wird darüber hinaus durch ein Verfahren mit den Merkmalen des Anspruchs 7 gelöst.

Erfindungsgemäß ist hierbei vorgesehen, dass bei einem Verfahren zum Betrieb einer Antriebseinrichtung für eine Verstelleinrichtung eines Fahrzeugs mit einem elektronisch kommutierten Motor und einer elektronischen Steuereinrichtung, die den elektronisch kommutierten Motor mittels einer Ansteuerspannung ansteuert, die Signalform der Ansteuerspannung anhand von mindestens einem Betriebsparameter zur Optimierung der Leistungsausbeute, der Akustik, der elektromagnetischen Abstrahlung und/oder der Erwärmung der Antriebseinrichtung angepasst wird, wobei
- in einem Normalbetrieb bei geringer Anzahl von Betätigungen der Antriebseinrichtung die Signalform so gewählt wird, dass die Akustik und die elektromagnetische Abstrahlung der Antriebseinrichtung optimiert werden, und
- bei einem Lastbetrieb bei häufiger Betätigung der Antriebseinrichtung die Signalform so gewählt wird, dass die Betriebstemperatur der Antriebseinrichtung begrenzt ist.

Das Erfindungsgemäße Verfahren ermöglicht somit eine variable Anpassung der Ansteuerspannung anhand von Betriebsparametern zur Optimierung des Betriebsverhaltens der Antriebseinrichtung.

Bevorzugt wird dabei die Signalform der Ansteuerspannung aus einer Anzahl von vorgegebenen Signalformen anhand der Betriebsparameter ausgewählt, wobei die Signalformen vorab in einem Speichermedium der elektronischen Steuereinrichtung der Antriebseinrichtung gespeichert und durch einen Mikrocomputer der elektronischen Steuereinrichtung ausgewählt werden können.

Bei einem Normalbetrieb der Antriebseinrichtung, bei dem nur eine geringe Anzahl von Betätigungen der Antriebseinrichtung erfolgt, wird die Signalform so gewählt, dass die Akustik, also insbesondere die Lautstärke der Antriebseinrichtung im Betrieb, und die elektromagnetische Abstrahlung der Antriebseinrichtung optimiert wird. Im Normalbetrieb, bei dem eine Überhitzung der Antriebseinrichtung, insbesondere der Halbleiterbauelemente und des Motors der Antriebseinrichtung, nicht zu erwarten ist, wird somit ein leises, für einen Fahrzeuginsassen angenehmes Betriebsverhalten bei geringer elektromagnetischer Störung anderer Bauteile gewährleistet.

Im Gegensatz zum Normalbetrieb wird bei einem Lastbetrieb, also bei häufiger Betätigung oder bei Schwergängigkeit der Antriebseinrichtung, die Signalform so gewählt, dass verhindert wird, dass die Betriebstemperatur der Antriebseinrichtung, also insbesondere die Temperatur der Halbleiterbauelemente der Antriebseinrichtung und die Temperatur des elektronisch kommutierten Motors begrenzt ist. Beim Lastbetrieb kann die Signalform bei drohender Überhitzung dann so angepasst werden, dass die Leistungsausbeute optimiert ist, somit eine geringere Leistung zum Betrieb der Antriebseinrichtung benötigt wird und somit einer Überhitzung entgegengewirkt wird.

Unter wiederum anderen Voraussetzungen, beispielsweise in dem Fall, dass nur eine geringe Bordspannung durch ein elektrisches Versorgungssystem des Fahrzeugs zur Verfügung gestellt wird, kann die Leistungsausbeute der Antriebseinrichtung optimiert werden und somit der Energieverbrauch der Antriebseinrichtung verringert werden. Andere Umstände, bei denen eine Optimierung der Leistungsausbeute vorteilhaft ist, sind Betriebszustände der Antriebseinrichtung, in denen eine Schwergängigkeit der Verstelleinrichtung, beispielsweise bedingt durch die Belastung oder die Position des zu verstellenden Fahrzeugteils, vorliegt. Eine erhöhte Leistungsausbeute ist hier gleichbedeutend mit einer Erhöhung der durch die Antriebseinrichtung zur Verfügung gestellten Kraft zum Verstellen des Fahrzeugteils der Verstelleinrichtung.

Zur Optimierung der Akustik der Antriebseinrichtung kann insbesondere eine näherungsweise sinusförmige Signalform für die Ansteuerspannung verwendet werden, mittels derer ein laufruhiges Verhalten des elektronisch kommutierten Motors erreicht wird. Eine Anpassung der näherungsweise sinusförmigen Signalform kann darüber hinaus erfolgen, um die Abstrahlung elektromagnetischer Störsignale zu minimieren.

Zur Optimierung der Leistungsausbeute kann insbesondere eine näherungsweise rechteckförmige Signalform gewählt werden.

In einer vorteilhaften Variante des Verfahrens wird die Signalform der Ansteuerspannung während des Betriebes der Antriebseinrichtung anhand der Betriebsparameter so ermittelt, dass die Leistungsausbeute, die Akustik, die elektromagnetische Abstrahlung und/oder die Erwärmung der Antriebseinrichtung optimiert sind. Die ermittelte Signalform wird dann in einem Speichermedium abgespeichert und kann später, bei einem ähnlichen Betriebszustand, aus dem Speichermedium abgerufen und als Signalform für die Ansteuerspannung verwendet werden. Die Antriebseinrichtung ist somit in der Lage, während des Betriebes der Antriebseinrichtung neue Signalformen zu erlernen, mittels derer auf einen durch Betriebsparameter beschriebenen Betriebszustand reagiert werden kann. Beispielsweise kann hierbei für einen Betriebszustand, bei dem eine Überhitzung der Antriebseinrichtung zu erwarten ist, die zugehörige Kombination der Betriebsparameter gespeichert werden, um bei einem zukünftigen Auftreten dieser Kombination der Betriebsparameter unverzüglich durch Abrufen der gespeicherten Signalform auf die drohende Überhitzung reagieren zu können. Auf diese Weise kann der Aufwand zur Bestimmung der Signalformen minimiert werden, indem Signalformen nur einmal bestimmt und gespeichert werden, so dass sie für den zukünftigen Betrieb zur Verfügung stehen. Eine wiederholte Optimierung der Signalform ist damit nicht nötig.

Hierbei ist es möglich, dass die Signalform anhand der Betriebsparameter während des Betriebes mittels eines iterativen Optimierungsalgorithmus optimiert wird, um so eine optimale Signalform für einen hinsichtlich der Leistungsausbeute, der Akustik, der elektromagnetischen Abstrahlung und/oder der Erwärmung optimiertem Betriebszustand zu erreichen. Die so ermittelte, für diesen Betriebszustand optimale Signalform wird dann abgespeichert und steht somit zum Abruf während des Betriebes zur Verfügung.

In einer Variante werden während des Betriebes der Antriebseinrichtung Bewegungsvorgänge eines durch die Antriebseinrichtung zu verstellenden Fahrzeugteils erlernt und anhand von Betriebsparametern abgespeichert. Beispielsweise kann mittels der über Sensoren erfassten Betriebsparameter auf die Position und die die Verstellbewegung des Fahrzeugteils zurück geschlossen werden und somit eventuelle Schwergängigkeiten des Fahrzeugteils während der Verstellbewegung erfasst werden. Anhand der Betriebsparameter, beispielsweise der Verstellposition, kann die Verstellbewegung und die zu verwendende Signalform dann gespeichert und abgelegt werden, so dass bei nachfolgenden Verstellvorgängen bei Erfassung ähnlicher Betriebsparameter die zugehörige optimale Signalform unmittelbar abgerufen werden kann.

Der Grundgedanke der Erfindung soll anhand der in den nachfolgenden Figuren dargestellten Ausführungsbeispiele näher erläutert werden. Es zeigen:
- Figur 1: eine schematische Darstellung einer Antriebseinrichtung mit einem elektronisch kommutierten Motor und einer elektronischen Steuereinrichtung;
- Figur 2: eine graphische Darstellung einer rechteckförmigen Signalform der Ansteuerspannung;
- Figur 3: eine graphische Darstellung einer näherungsweise sinusförmigen Signalform der Ansteuerspannung und
- Figur 4: eine graphische Darstellung einer für einen Betriebszustand optimierten Signalform.

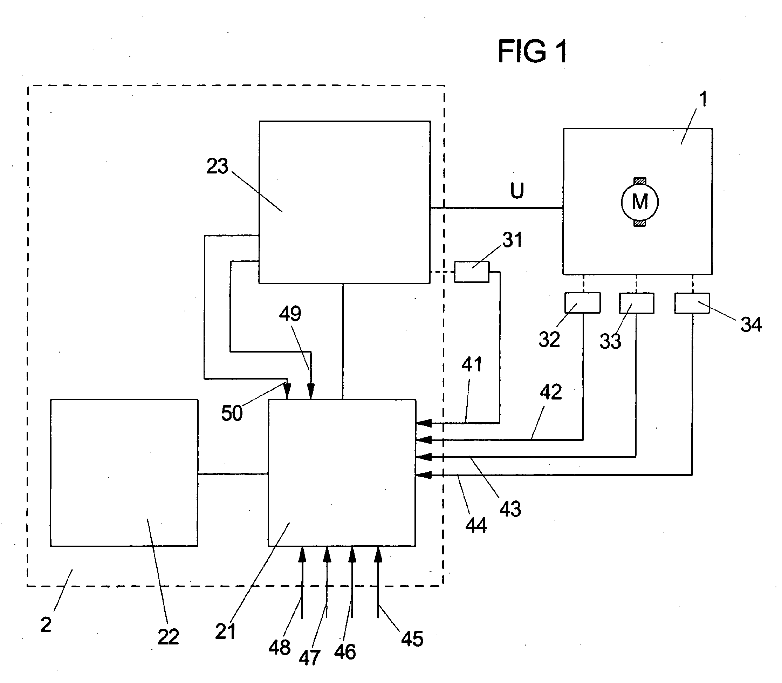

Die Figur 1 zeigt eine schematische Darstellung einer Antriebseinrichtung für eine Verstelleinrichtung, die vorteilhafterweise zum Verstellen eines Fahrzeugteils eines Fahrzeugs eingesetzt werden kann. Die Antriebseinrichtung weist einen elektronisch kommutierten Motor 1 und eine elektronische Steuereinrichtung 2 auf, die durch einen Mikrocomputer 21, ein Speichermedium 22 und eine Halbleiterendstufe 23 gebildet ist. Die elektronische Steuereinrichtung 2 dient zur Ansteuerung des elektronisch kommutierten Motors 1, wobei der Mikrocomputer 21 der elektronischen Steuereinrichtung 2 eine Ansteuerspannung U erzeugt, die durch die Halbleiterendstufe 23 verstärkt und an den elektronisch kommutierten Motor 1 geleitet wird. Der elektronisch kommutierte Motor 1 wirkt auf ein bewegliches Fahrzeugteil, beispielsweise eine Fensterscheibe einer Fahrzeugtür oder ein Schiebedach, zum Antreiben einer Verstellbewegung ein. Mittels der Ansteuerspannung U wird hierbei der elektronisch kommutierte Motor 1 durch die elektronische Steuereinrichtung 2 angesteuert und angetrieben, indem die Ansteuerspannung einen Stromfluss in elektrischen Wicklungen an einem Stator des elektronisch kommutierten Motors 1 erzeugt und die elektrischen Windungen somit ein elektromagnetisches Feld bewirken, das mit einem Rotor des elektronisch kommutierten Motors 1 zusammenwirkt und den Rotor in eine Rotationsbewegung versetzt.

Das Betriebsverhalten des elektronisch kommutierten Motors 1 ist wesentlich abhängig von der Ansteuerspannung U und deren Signalform. Herkömmlicherweise wird für die Ansteuerspannung U eine rechteckförmige Signalform gewählt, die somit einer Schaltungsfunktion entspricht und dementsprechend einfach zu realisieren ist. Eine solche rechteckförmige Signalform ist vorteilhaft hinsichtlich der Leistungsausbeute der Halbleiterendstufe 23 und deren Halbleiterbauelementen, die das durch den Mikrocomputer 21 zur Verfügung gestellte Signal verstärken und die Ansteuerspannung U dem elektronisch kommutierten Motor 1 zur Verfügung stellen. Eine solche rechteckförmige Signalform ist jedoch nachteilig hinsichtlich der Akustik des elektronisch kommutierten Motors 1 im Betrieb. Um ein möglichst laufruhiges, hinsichtlich der Akustik optimiertes Betriebsverhalten der Antriebseinrichtung zu erreichen, sollte die dem elektronisch kommutierten Motor 1 zur Verfügung gestellte Ansteuerspannung U im Idealfall sinusförmig sein. Eine sinusförmige Ansteuerspannung U ist jedoch wiederum nachteilig für die Leistungsausbeute der Halbleiterendstufe 23 und bewirkt somit eine verstärkte Erwärmung der Halbleiterendstufe 23 im Betrieb der Antriebseinrichtung.

Grundgedanke der vorliegenden Erfindung ist es, die Signalform der Ansteuerspannung anhand von Betriebsparametern auszuwählen und zur Optimierung der Leistungsausbeute, der Akustik, der elektromagnetischen Abstrahlung und/oder der Erwärmung der Antriebseinrichtung jeweils so anzupassen, dass ein optimiertes Betriebsverhalten erreicht wird. Zu diesem Zweck weist die Antriebseinrichtung gemäß Figur 1 ein Speichermedium 22 und eine Anzahl von Sensoren 31-34 auf, die jeweils mit dem Mikrocomputer 21 der elektronischen Steuereinrichtung 2 zusammenwirken. Die durch die Sensoren 31-34 erfassten Messsignale stellen Betriebsparameter 41-44 dar, die dem Mikrocomputer 21 zur Verfügung gestellt werden und anhand derer der Mikrocomputer 21 die für die jeweilige Kombination von Betriebsparametern 41-44 optimale Signalform für die Ansteuerspannung U auswählt. Die Sensoren können hierbei beispielsweise durch
- einen Temperatursensor 31 zur Erfassung der Temperatur der Halbleiterendstufe 23 und deren Halbleiterbauelemente,
- einen Drehzahlsensor 32 zur Erfassung der Drehzahl des elektronisch kommutierten Motors 1,
- einen Positionssensor 33 zur Erfassung der Position des durch den elektronisch kommutierten Motor 1 angetriebenen Fahrzeugteils und
- einen Sensor 34 zur Erfassung der elektromagnetischen Abstrahlung, also der abgestrahlten Störsignale des elektronisch kommutierten Motors 1 ausgebildet sein. Weitere Betriebsparameter 45-48 können dem Mikrocomputer 21 zur Verfügung gestellt werden, zu denen beispielsweise
- die Temperatur der Umgebung, gemessen durch einen externen Sensor,
- die Lautstärke der Antriebseinrichtung, gemessen durch ein Mikrofon,
- die Bordspannung eines elektronischen Versorgungssystems des Fahrzeugs,
- der Bewegungszustand des Fahrzeugs und/oder
- die Fahrgeschwindigkeit des Fahrzeugs
gehören können. Darüber hinaus kann der Mikrocomputer 21 als Betriebsparameter 49, 50 den durch den elektronisch kommutierten Motor 1 aufgenommenen Strom und die durch den elektronisch kommutierten Motor 1 aufgenommene Leistung sowie die Anzahl der Betätigungen der Antriebseinrichtung erfassen.

Um die Ansteuerspannung U und deren Signalform zu bestimmen, erfasst der Mikrocomputer 21 die Betriebsparameter 41-50 und wählt anhand der Betriebsparameter 41-50 eine optimale Signalform für die Ansteuerspannung U aus. Die Antriebseinrichtung kann hierbei zur Bestimmung der optimalen Signalform eine Vielzahl von Betriebsparametern 41-50 mit einbeziehen. Denkbar ist jedoch auch, dass die Signalform lediglich anhand eines einzelnen oder einiger weniger Betriebsparameter ausgewählt wird. Denkbar ist beispielsweise, dass lediglich die Temperatur der Halbleiterendstufe 23 erfasst wird und die Signalform der Ansteuerspannung U in Abhängigkeit von der Erwärmung der Halbleiterendstufe 23 so angepasst wird, dass einer übermäßigen Erwärmung entgegen gewirkt wird.

Die Bestimmung der Signalform der Ansteuerspannung kann hierbei auf unterschiedliche Weise erfolgen. Zum einen kann eine Anzahl von vorab bestimmten Signalformen im

Speichermedium 22 abgelegt sein, aus denen der Mikrocomputer 21 für eine bestimmte Kombination von Betriebsparametern 41-50 jeweils eine optimierte Signalform auswählt. Beispielsweise kann der Mikrocomputer 21 anhand der durch den Sensor 31 erfassten Temperatur der Halbleiterendstufe 23 und deren Halbleiterbauelemente die Erwärmung der Halbleiterendstufe 23 im Betrieb der Antriebseinrichtung feststellen. Anhand dieser Information wählt der Mikrocomputer 21 dann aus der in dem Speichermedium 22 abgelegten Anzahl von unterschiedlichen Signalformen solch eine Signalform aus, mittels derer eine erhöhte Leistungsausbeute in der Halbleiterendstufe 23 zu erreichen ist, so dass die zum Betrieb des elektronisch kommutierten Motors 1 zur Verfügung zu stellende Leistung verringert werden kann. Auf diese Weise ist es dann möglich, die die Erhitzung der Halbleiterendstufe 23 bewirkende Verlustleistung zu verringern und somit einer Überhitzung der Halbleiterendstufe 23 und somit der Antriebseinrichtung entgegenzuwirken.

In einer anderen Betriebssituation kann der Mikrocomputer 21 beispielsweise erfassen, dass die Lautstärke des elektronisch kommutierten Motors 1 erhöht ist und gleichzeitig vermehrt elektromagnetische Störsignale durch den elektronisch kommutierten Motor 1 abgestrahlt werden. Um diesem entgegenzuwirken, wählt der Mikrocomputer 21 dann aus der Anzahl der in dem Speichermedium 22 abgelegten Signalformen die Signalform aus, mittels derer eine Optimierung sowohl der Lautstärke des elektronisch kommutierten Motors 1 als auch der elektromagnetischen Abstrahlung erreicht werden kann. Die übrigen Betriebsparameter, beispielsweise die Umgebungstemperatur, der Bewegungszustand des Fahrzeugs und die Fahrgeschwindigkeit, können hierbei berücksichtigt werden und in die Auswahl der optimalen Signalform einfließen.

Es ist auch denkbar, dass die optimale Signalform während des Betriebes mittels eines Optimierungsalgorithmus ermittelt wird. Der Mikrocomputer 21 erfasst in diesem Fall zu optimierende Betriebsparameter 41-50, beispielsweise die Temperatur der Halbleiterendstufe 23 und/oder die Lautstärke der Antriebseinrichtung und passt die Signalform der Ansteuerspannung U iterativ so an, bis die Betriebsparameter 41-50, in diesem Fall die Temperatur der Halbleiterendstufe 23 und die Lautstärke der Antriebseinrichtung, akzeptable Werte erreicht haben. Auf diese Weise ist ein Erlernen von Signalformen durch den Mikrocomputer 21 möglich. Die mittels des Optimierungsalgorithmus ermittelten Signalformen werden anschließend in dem Speichermedium 22 abgespeichert und stehen somit in Zukunft zur Verfügung. Treten im späteren Betrieb der Antriebseinrichtung ähnliche Kombinationen von Betriebsparametern 41-50 auf, so wird anhand der jeweiligen Kombination der Betriebsparameter 41-50 die abgespeicherte Signalform abgerufen und zur Optimierung des Betriebsverhaltens der Antriebseinrichtung verwendet. Durch das Abspeichern der ermittelten Signalformen im Speichermedium 22 erübrigt sich dann im späteren Betrieb eine erneute Ermittlung der optimalen Signalform. Dieses ermöglicht eine erhebliche Verringerung der Rechenleistung und des Aufwands im Betrieb und gewährleistet, dass bei einer erfassten Kombination von Betriebsparametern 41-50 die optimale Signalform unverzüglich und zeitnah zur Verfügung gestellt werden kann.

Denkbar ist auch, dass die elektronische Steuereinrichtung im wiederholten Betrieb Bewegungsvorgänge erlernt und anhand von Betriebsparametern 41-50 abspeichert. Beispielsweise kann mittels der über die Sensoren 32, 33 erfassten Betriebsparameter 42, 43, die die Drehzahl des elektronisch kommutierten Motors (die mit der Verstellgeschwindigkeit des zu verstellenden Fahrzeugteils korreliert ist) und die Position des Fahrzeugteils angeben, auf die Verstellbewegung des Fahrzeugteils zurück geschlossen werden. Auf diese Weise können eventuelle Schwergängigkeiten des Fahrzeugteils während der Verstellbewegung erfasst werden und anhand der Betriebsparameter, beispielsweise der Verstellposition, gespeichert werden. Befindet sich das Fahrzeugteil bei einem erneuten Verstellvorgang in einer Verstellposition, in der bei einem vorherigen Verstellvorgang eine Schwergängigkeit erfasst worden war, so kann automatisch in Abhängigkeit von der Verstellposition die Signalform der Ansteuerspannung U so angepasst werden, dass das durch die Antriebseinrichtung zur Verfügung gestellte Drehmoment maximiert ist, indem die Leistungsausbeute der Antriebseinrichtung optimiert wird, und somit der Schwergängigkeit durch die Zurverfügungstellung einer erhöhten Verstellkraft entgegen gewirkt wird. Auf diese Weise kann automatisch und frühzeitig auf eventuell auftretende Schwergängigkeiten bei einem Verstellvorgang eines Fahrzeugteils reagiert werden.

Prinzipiell ist auch eine Ausführung der elektronischen Steuereinrichtung 2 ohne Speichermedium 22 denkbar, die dann anhand der Betriebsparameter 41-50 jeweils iterativ eine optimale Signalform ermittelt, ohne dass auf vorab gespeicherte Signalformen zurückgegriffen wird.

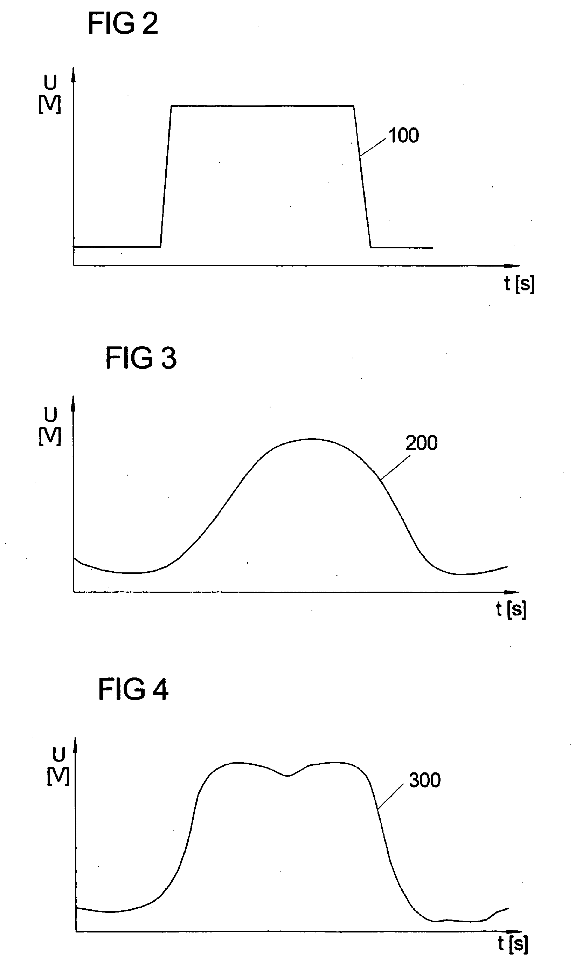

Figuren 2 bis 4 zeigen unterschiedliche Signalformen der Ansteuerspannung U über der Zeit t, die jeweils zur Erreichung bestimmter Betriebsverhalten optimal sein und zur Optimierung der Leistungsausbeute, der Akustik, der elektromagnetischen Abstrahlung und/oder der Erwärmung der Antriebseinrichtung herangezogen werden können. Figuren 2 bis 4 zeigen dabei im Einzelnen eine rechteckförmige Signalform 100 der Ansteuerspannung U (Figur 2), eine näherungsweise sinusförmige Signalform 200 (Figur 3) und eine optimierte Signalform 300, die weder rechteckförmig noch sinusförmig ist (Figur 4).

Die rechteckförmige Signalform 100 gemäß der Figur 2 ist in der Regel hierbei optimal für einen Betrieb mit einer erhöhten Leistungsausbeute und kann verwendet werden, um bei gleicher Antriebsleistung eine verringerte Verlustleistung in der Halbleiterendstufe 23 zu erreichen oder bei erhöhter Leistung eine erhöhte Verstellkraft für die Verstelleinrichtung zur Verfügung zu stellen.

Die sinusförmige Signalform 200 gemäß der Figur 3 ist in der Regel optimal für ein laufruhiges Betriebsverhalten des elektronisch kommutierten Motors 1, da sie in nahezu idealer Weise das für den Betrieb des elektronisch kommutierten Motors 1 erforderliche sinusförmige elektromagnetische Wechselfeld nachbildet und somit ein für einen laufruhigen Antrieb des elektronisch kommutierten Motors 1 optimales Wechselfeld erzeugt. Die sinusförmige Signalform gemäß Figur 3 führt jedoch zu einer verschlechterten Leistungsausbeute der Halbleiterendstufe 23 und somit zu einer erhöhten Verlustleistung der Halbleiterendstufe 23, die in Wärme umgesetzt wird und dadurch zu einer Erwärmung der Halbleiterendstufe 23 führt.

Die Signalform 300 gemäß Figur 4 ist weder sinusförmig noch rechteckförmig und repräsentiert beispielsweise eine Signalform, bei der die elektromagnetische Abstrahlung, also die Erzeugung elektromagnetischer Störsignale durch den elektronisch kommutierten Motor 1 reduziert ist oder ein optimiertes Gesamtbetriebsverhalten, also ein Betriebsverhalten, das hinsichtlich mehrerer Optimierungskriterien (beispielsweise der Leistungsausbeute und der elektromagnetischen Abstrahlung) gleichzeitig optimiert ist, erhalten wird.

Der Einsatz der Erfindung ist nicht auf die oben beschriebenen Ausführungsbeispiele beschränkt. Beispielsweise können gänzlich anders geartete Betriebsparameter verwendet werden und in die Bestimmung der Signalform mit einfließen. Darüber hinaus kann die Optimierung der Signalform gänzlich anders geartete, in beliebiger Weise geformte Signalformen ergeben, die hinsichtlich eines oder mehrerer Betriebsparameter optimierte Signalformen darstellen.

### Bezugszeichenliste

| | |
|---|---|
| 1 | Elektronisch kommutierter Motor |
| 2 | Elektronische Steuereinrichtung |
| 21 | Mikrocomputer |
| 22 | Speichermedium |
| 23 | Halbleiterendstufe |
| 31-34 | Sensor |
| 41-50 | Betriebsparameter |
| 100, 200, 300 | Signalform |
| t | Zeit |
| U | Ansteuerspannung |

## Patentansprüche

1. Antriebseinrichtung für eine Verstelleinrichtung zum Verstellen eines Fahrzeugteils eines Fahrzeugs, mit einem elektronisch kommutierten Motor und einer elektronischen Steuereinrichtung, die den elektronisch kommutierten Motor mittels einer Ansteuerspannung ansteuert,
**dadurch gekennzeichnet,**
**dass** die elektronische Steuereinrichtung (2) Mittel (21, 22, 23) aufweist, mittels derer die Signalform (100, 200, 300) der Ansteuerspannung (U) anhand mindestens eines Betriebsparameters (41-50) zur Optimierung der Leistungsausbeute, der Akustik, der elektromagnetischen Abstrahlung und/oder der Erwärmung der Antriebseinrichtung (1, 2) anpassbar ist, wobei die Mittel ausgebildet und vorgesehen sind,
- in einem Normalbetrieb bei geringer Anzahl von Betätigungen der Antriebseinrichtung (1, 2) die Signalform (100, 200, 300) so zu wählen, dass die Akustik und die elektromagnetische Abstrahlung der Antriebseinrichtung (1, 2) optimiert werden, und
- bei einem Lastbetrieb bei häufiger Betätigung der Antriebseinrichtung (1, 2) die Signalform (100, 200, 300) so zu wählen, dass die Betriebstemperatur der Antriebseinrichtung (1, 2) begrenzt ist.

2. Antriebseinrichtung nach Anspruch 1, **dadurch gekennzeichnet, dass** der mindestens eine Betriebsparameter (41-50) durch den durch den elektronisch kommutierten Motor (1) aufgenommenen Strom, die durch den elektronisch kommutierten Motor (1) aufgenommene Leistung, die Anzahl der Betätigungen der Antriebseinrichtung (1, 2), das Betätigungsverhalten der Antriebseinrichtung (1, 2), die Verstellgeschwindigkeit der Antriebseinrichtung (1, 2), die Position des durch die Antriebseinrichtung (1, 2) zu verstellenden Fahrzeugteils, die Außentemperatur, die elektromagnetische Abstrahlung der Antriebseinrichtung (1, 2), die Betriebstemperatur der Antriebseinrichtung (1, 2), die Lautstärke der Antriebseinrichtung (1, 2), die Bordspannung eines elektrischen Versorgungssystems des Fahrzeugs, den Bewegungszustand des Fahrzeugs und/oder die Fahrgeschwindigkeit des Fahrzeugs gebildet ist.

3. Antriebseinrichtung nach Anspruch 1 oder 2, **dadurch gekennzeichnet, dass** die elektronische Steuereinrichtung (2) mit mindestens einem Sensor (31-34) zum Erfassen des mindestens einen Betriebsparameters (41-50) zusammenwirkt.

4. Antriebseinrichtung nach mindestens einem der Ansprüche 1 bis 3, **dadurch gekennzeichnet, dass** die Signalform (100, 200, 300) der Ansteuerspannung (U) zur Optimierung der Leistungsausbeute, der Akustik, der elektromagnetischen Abstrahlung und/oder der Erwärmung der Antriebseinrichtung frei synthetisierbar ist.

5. Antriebseinrichtung nach mindestens einem der vorangehenden Ansprüche, **dadurch gekennzeichnet, dass** die elektronische Steuereinrichtung (2) einen Mikrocomputer (21) aufweist, der die Signalform (100, 200, 300) der Ansteuerspannung (U) anhand des mindestens einen Betriebsparameters (41-50) aus einer Anzahl von vorgegebenen und in einem Speichermedium (22) der elektronischen Steuereinheit (2) abgespeicherten Signalformen (100, 200, 300) auswählt.

6. Antriebseinrichtung nach mindestens einem der vorangehenden Ansprüche, **dadurch gekennzeichnet, dass** die elektronische Steuereinrichtung (2, 21, 22, 23) die Signalform (100, 200, 300) der Ansteuerspannung (U) anhand des mindestens einen Betriebsparameters (41-50) zur Optimierung der Leistungsausbeute, der Akustik, der elektromagnetischen Abstrahlung und/oder der Erwärmung der Antriebseinrichtung (1, 2) während des Betriebes der Antriebseinrichtung (1, 2) variiert und regelt.

7. Verfahren zum Betrieb einer Antriebseinrichtung für eine Verstelleinrichtung eines Fahrzeugs mit einem elektronisch kommutierten Motor und einer elektronischen Steuereinrichtung, die den elektronisch kommutierten Motor mittels einer Ansteuerspannung ansteuert,
**dadurch gekennzeichnet,**
**dass** die Signalform (100, 200, 300) der Ansteuerspannung (U) anhand von mindestens einem Betriebsparameter (41-50) zur Optimierung der Leistungsausbeute, der Akustik, der elektromagnetischen Abstrahlung und/oder der Erwärmung der Antriebseinrichtung (1, 2) angepasst wird, wobei
- in einem Normalbetrieb bei geringer Anzahl von Betätigungen der Antriebseinrichtung (1, 2) die Signalform (100, 200, 300) so gewählt wird, dass die Akustik und die elektromagnetische Abstrahlung der Antriebseinrichtung (1, 2) optimiert werden, und
- bei einem Lastbetrieb bei häufiger Betätigung der Antriebseinrichtung (1, 2) die Signalform (100, 200, 300) so gewählt wird, dass die Betriebstemperatur der Antriebseinrichtung (1, 2) begrenzt ist.

8. Verfahren nach Anspruch 7, **dadurch gekennzeichnet, dass** die Signalform (100, 200, 300) der Ansteuerspannung (U) aus einer Anzahl von vorgegebenen Signalformen (100, 200, 300) anhand des mindestens einen Betriebsparameters (41-50) ausgewählt wird.

9. Verfahren nach Anspruch 7 oder 8, **dadurch gekennzeichnet, dass** bei geringer Bordspannung des elektrischen Versorgungssystems des Fahrzeugs die Leistungsausbeute der Antriebseinrichtung (1, 2) optimiert wird.

10. Verfahren nach einem der Ansprüche 7 bis 9, **dadurch gekennzeichnet, dass** zur Optimierung der Akustik eine näherungsweise sinusförmige Signalform (200) für die Ansteuerspannung (U) verwendet wird.

11. Verfahren nach einem der Ansprüche 7 bis 9, **dadurch gekennzeichnet, dass** zur Optimierung der Leistungsausbeute der Antriebseinrichtung (1, 2) eine näherungsweise rechteckförmige Signalform (100, 300) für die Ansteuerspannung (U) verwendet wird.

12. Verfahren nach einem der vorangehenden Ansprüche 7 bis 11, **dadurch gekennzeichnet, dass** die Signalform (100, 200, 300) der Ansteuerspannung (U) während des Betriebes der Antriebseinrichtung (1, 2) anhand des mindestens einen Betriebsparameters (41-50) zur Optimierung der Leistungsausbeute, der Akustik, der elektromagnetischen Abstrahlung und/oder der Erwärmung der Antriebseinrichtung (1, 2) ermittelt wird und die ermittelte Signalform (100, 200, 300) in dem Speichermedium abgespeichert wird.

13. Verfahren nach Anspruch 12, **dadurch gekennzeichnet, dass** die Signalform (100, 200, 300) der Ansteuerspannung (U) anhand des mindestens einen Betriebsparameters (41-50) durch eine iterative Optimierung ermittelt wird.

14. Verfahren nach einem der vorangehenden Ansprüche 7 bis 13, **dadurch gekennzeichnet, dass** während des Betriebes der Antriebseinrichtung (1, 2) Bewegungsvorgänge eines durch die Antriebseinrichtung (1, 2) zu verstellenden Fahrzeugteils erlernt und anhand von mindestens einem Betriebsparameter (41-50) abgespeichert werden.

## Claims

1. A drive device for an adjusting device for adjusting a vehicle component of a vehicle, having an electronically commutated motor and an electronic control device which actuates the electronically commutated motor by means of an actuating voltage,
**characterized in**
**that** the electronic control device (2) has means (21, 22, 23), by means of which the signal form (100, 200, 300) of the actuating voltage (U) can be adapted on the basis of at least one operating parameter (41-50) in order to optimize the power output, the acoustics, the electromagnetic irradiation and/or the heating of the drive device (1, 2), wherein the means are formed and provided to
- in normal operation with a small number of activations of the drive device (1, 2) select the signal form (100, 200, 300) such that the acoustics and the electromagnetic irradiation of the drive device (1, 2) are optimized, and
- in operation under load with frequent activation of the drive device (1, 2) select the signal form (100, 200, 300) such that the operating temperature of the drive device (1, 2) is limited.

2. The drive device as claimed in claim 1, **characterized in that** the at least one operating parameter (41-50) is formed by the current taken up by the electronically commutated motor (1), the power taken up by the electronically commutated motor (1), the number of activations of the drive device (1, 2), the activation behavior of the drive device (1, 2), the adjustment speed of the drive device (1, 2), the position of the vehicle component to be adjusted by the drive device (1, 2), the external temperature, the electromagnetic irradiation of the drive device (1, 2), the operating temperature of the drive device (1, 2), the volume of the drive device (1, 2), the voltage of an on-board electric supply system of the vehicle, the movement state of the vehicle and/or the velocity of the vehicle.

3. The drive device as claimed in claim 1 or 2, **characterized in that** the electronic control device (2) cooperates with at least one sensor (31-34) for sensing the at least one operating parameter (41-50).

4. The drive device as claimed in at least one of claims 1 to 3, **characterized in that** the signal form (100, 200, 300) of the actuating voltage (U) can be freely synthesized in order to optimize the power output, the acoustics, the electromagnetic irradiation and/or the heating of the drive device.

5. The drive device as claimed in at least one of the preceding claims, **characterized in that** the electronic control device (2) has a microcomputer (21) which selects the signal form (100, 200, 300) of the actuating voltage (U) on the basis of the at least one operating parameter (41-50) from a number of predefined signal forms (100, 200, 300) which are stored in a memory medium (22) of the electronic control unit (2).

6. The drive device as claimed in at least one of the preceding claims, **characterized in that** the electronic control device (2, 21, 22, 23) varies and adjusts the signal form (100, 200, 300) of the actuating voltage (U) on the basis of the at least one operating parameter (41-50) in order to optimize the power output, the acoustics, the electromagnetic irradiation and/or the heating of the drive device (1, 2) during operation of the drive device (1, 2).

7. A method for operating a drive device for an adjusting device of a vehicle having an electronically commutated motor and an electronic control device which actuates the electronically commutated motor by means of an actuating voltage, **characterized in**
**that** the signal form (100, 200, 300) of the actuating voltage (U) is adapted on the basis of at least one operating parameter (41-50) in order to optimize the power output, the acoustics, the electromagnetic irradiation and/or the heating of the drive device (1, 2), wherein
- in normal operation with a small number of activations of the drive device (1, 2) the signal form (100, 200, 300) is selected such that the acoustics and the electromagnetic irradiation of the drive device (1, 2) are optimized, and
- in operation under load with frequent activation of the drive device (1, 2) the signal form (100, 200, 300) is selected such that the operating temperature of the drive device (1, 2) is limited.

8. The method as claimed in claim 7, **characterized in that** the signal form (100, 200, 300) of the actuating voltage (U) is selected from a number of predefined signal forms (100, 200, 300) on the basis of the at least one operating parameter (41-50).

9. The method as claimed in claim 7 or 8, **characterized in that**, when the voltage of the on-board electric supply system of the vehicle is low, the power output of the drive device (1, 2) is optimized.

10. The method as claimed in one of claims 7 to 9, **characterized in that** for the purpose of optimization of the acoustics an approximately sinusoidal signal form (200) is used for the actuating voltage (U).

11. The method as claimed in one of claims 7 to 9, **characterized in that** for the purpose of optimization of the power output of the drive device (1, 2) an approximately square-wave signal form (100, 300) is used for the actuating voltage (U).

12. The method as claimed in one of the preceding claims 7 to 11, **characterized in that** the signal form (100, 200, 300) of the actuating voltage (U) is determined during operation of the drive device (1, 2) on the basis of the at least one operating parameter (41-50) in order to optimize the power output, the acoustics, the electromagnetic irradiation and/or the heating of the drive device (1, 2), and the signal form (100, 200, 300) which is determined is stored in the memory medium.

13. The method as claimed in claim 12, **characterized in that** the signal form (100, 200, 300) of the actuating voltage (U) is determined on the basis of the at least one operating parameter (41-50) by means of iterative optimization.

14. The method as claimed in one of the preceding claims 7 to 13, **characterized in that**, during operation of the drive device (1, 2), movement processes of a vehicle component to be adjusted by the drive device (1, 2) are learnt and are stored on the basis of at least one operating parameter (41-50).

## Revendications

1. Mécanisme d'entraînement pour un dispositif de réglage pour le réglage d'un élément de véhicule, comprenant un moteur commuté électroniquement et un dispositif électronique de commande qui commande le moteur commuté électroniquement au moyen d'une tension de commande,
**caractérisé par le fait**
**que** le dispositif électronique de commande (2) comprend des moyens (21, 22, 23) à l'aide desquels la forme des signaux (100, 200, 300) de la tension de commande (U) peut être adaptée, en se fondant sur au moins un paramètre de fonctionnement (41-50); en vue de l'optimisation du rendement de puissance, de l'acoustique, du rayonnement électromagnétique et/ou de l'échauffement du mécanisme d'entraînement (1, 2), lesdits moyens étant réalisés et prévus
- pour, en fonctionnement normal dans le cas d'un faible nombre d'actionnements du mécanisme d'entraînement (1, 2), sélectionner la forme des signaux (100, 200, 300) de telle sorte que l'acoustique et le rayonnement électromagnétique du mécanisme d'entraînement (1, 2) soient optimisés, et
- pour, en fonctionnement sous charge dans le cas d'un actionnement fréquent du mécanisme d'entraînement (1, 2), sélectionner ladite forme des signaux (100, 200, 300) de telle sorte que la température de fonctionnement du mécanisme d'entraînement (1, 2) soit limitée.

2. Mécanisme d'entraînement selon la revendication 1, **caractérisé en ce que** le au moins un paramètre de fonctionnement (41-50) est formé par le courant absorbé par le moteur (1) commuté électroniquement, par la puissance absorbée par le moteur (1) commuté électroniquement, par le nombre des actionnements du mécanisme d'entraînement (1, 2), par le comportement d'actionnement du mécanisme d'entraînement (1, 2), par la vitesse de réglage du mécanisme d'entraînement (1, 2), par la position de l'élément du véhicule devant être réglée par le mécanisme d'entraînement (1, 2), par la température extérieure, par le rayonnement électromagnétique du mécanisme d'entraînement (1, 2), par la température de fonctionnement du mécanisme d'entraînement (1, 2), par le volume sonore du mécanisme d'entraînement (1, 2), par la tension embarquée d'un système d'alimentation électrique du véhicule, par l'état cinématique du véhicule et/ou par la vitesse de déplacement du véhicule.

3. Mécanisme d'entraînement selon la revendication 1 ou 2, **caractérisé en ce que** le dispositif électronique de commande (2) coopère avec au moins un capteur (31-34) affecté à la détection du au moins un paramètre de fonctionnement (41-50).

4. Mécanisme d'entraînement selon au moins l'une des revendications 1 à 3, **caractérisé en ce que** la forme des signaux (100, 200, 300) de la tension de commande (U) peut être synthétisée librement en vue de l'optimisation du rendement de puissance, de l'acoustique, du rayonnement électromagnétique et/ou de l'échauffement dudit mécanisme d'entraînement.

5. Mécanisme d'entraînement selon au moins l'une des revendications précédentes, **caractérisé en ce que** le dispositif électronique de commande (2) comprend un micro-ordinateur (21) qui sélectionne la forme des signaux (100, 200, 300) de la tension de commande (U) en se fondant sur le au moins un paramètre de fonctionnement (41-50), sur la base d'un nombre de formes de signaux (100, 200, 300) préétablies et mémorisées dans un moyen de mémorisation (22) de l'unité électronique de commande (2).

6. Mécanisme d'entraînement selon au moins l'une des revendications précédentes, **caractérisé en ce que** le dispositif électronique de commande (2, 21, 22, 23) fait varier et régule la forme des signaux (100, 200, 300) de la tension de commande (U) en se fondant sur le au moins un paramètre de fonctionnement (41-50), en vue de l'optimisation du rendement de puissance, de l'acoustique, du rayonnement électromagnétique et/ou de l'échauffement du mécanisme d'entraînement (1, 2) au cours du fonctionnement du mécanisme d'entraînement (1, 2).

7. Procédé de fonctionnement d'un mécanisme d'entraînement pour un dispositif de réglage d'un véhicule, comprenant un moteur commuté électroniquement et un dispositif électronique de commande qui commande le moteur commuté électroniquement au moyen d'une tension de commande,
**caractérisé par le fait**
**que** la forme des signaux (100, 200, 300) de la tension de commande (U) est adaptée, en se fondant sur au moins un paramètre de fonctionnement (41-50), en vue de l'optimisation du rendement de puisasnce, de l'acoustique, du rayonnement électromagnétique et/ou de l'échauffement du mécanisme d'entraînement (1, 2), et dans lequel procédé
- dans un fonctionnement normal dans le cas d'un faible nombre d'actionnements du mécanisme d'entraînement (1, 2), la forme des signaux (100, 200, 300) est sélectionnée de telle sorte que l'acoustique et le rayonnement électromagnétique dudit mécanisme d'entraînement (1, 2) soient optimisés, et ,
- en fonctionnement sous charge dans le cas d'un actionnement fréquent du mécanisme d'entraînement (1, 2), la forme des signaux (100, 200, 300) est sélectionnée de telle sorte que la température de fonctionnement du mécanisme d'entraînement (1, 2) soit limitée.

8. Procédé selon la revendication 7, **caractérisé en ce que** la forme des signaux (100, 200, 300) de la tension de commande (U) est sélectionnée sur la base d'un nombre de formes de signaux préétablies (100, 200, 300) en se fondant sur le au moins un paramètre de fonctionnement (41-50).

9. Procédé selon la revendication 7 ou 8, **caractérisé en ce que** le rendement de puissance du mécanisme d'entraînement (1, 2) est optimisé dans le cas d'une faible tension embarquée du système d'alimentation électrique du véhicule.

10. Procédé selon l'une des revendications 7 à 9, **caractérisé en ce qu'**une forme de signaux (200) approximativement sinusoïdale est employée pour la tension de commande (U) en vue de l'optimisation de l'acoustique.

11. Procédé selon l'une des revendications 7 à 9, **caractérisé en ce qu'**une forme de signaux (100, 300) approximativement rectangulaire est employée pour la tension de commande (U) en vue de l'optimisation du rendement de puissance du mécanisme d'entraînement (1, 2).

12. Procédé selon l'une des revendications 7 à 11 précédentes, **caractérisé en ce que** la forme des signaux (100, 200, 300) de la tension de commande (U) est déterminée au cours du fonctionnement du mécanisme d'entraînement (1, 2) en se fondant sur le au moins un paramètre de fonctionnement (41-50) en vue de l'optimisation du rendement de puissance, de l'acoustique, du rayonnement électromagnétique et/ou de l'échauffement dudit mécanisme d'entraînement (1, 2), et la forme des signaux (100, 200, 300) déterminée est mémorisée dans le moyen de mémorisation.

13. Procédé selon la revendication 12, **caractérisé en ce que** la forme des signaux (100, 200, 300) de la tension de commande (U) est déterminée en se fondant sur le au moins un paramètre de fonctionnement (41-50) par une optimisation itérative.

14. Procédé selon l'une des revendications 7 à 13 précédentes, **caractérisé en ce que** des processus cinématiques d'un élément du véhicule devant être réglée par le mécanisme d'entraînement (1, 2), sont acquis au cours du fonctionnement du mécanisme d'entraînement (1, 2) et sont mémorisés en se fondant sur au moins un paramètre de fonctionnement (41-50).
